# EUROPEAN PATENT APPLICATION

(11) **EP 4 661 590 A1**
(43) Date of publication of application: **10.12.2025**
(21) Application number: 24750615.7
(22) Date of filing: 02.02.2024
(51) Int. Cl.: H04W 76/22, H04W 40/34, H04W 76/16, H04W 60/00

(54) **PATH SWITCHING**

(30) Priority: 02.02.2023 US 202363442770 P; 05.04.2023 US 202363457150 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Plasseraud IP
(86) International application number: PCT/KR2024/001591
(87) International publication number: WO 2024/162818

(57) **Abstract**

One embodiment of the present disclosure provides a method by which an AMF performs communication. The method may comprise the steps of: receiving a registration request message from a UE via a new non-3GPP AN; triggering a procedure for releasing an AN resource for an old non-3GPP access; receiving, from an SMF, a request message for requesting the establishment of a user plane resource; rejecting the request message on the basis that the request message was received before the completion of non-3GPP path switching; and transmitting, to the SMF, an indication that the request message has been temporarily rejected.

## Description

### TECHNICAL FIELD

The present disclosure relates to a radio communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

In NR, non-3GPP path switching behavior, where the communication path changes in non-3GPP access, is supported. However, previously, there was no effective way to perform Non-3GPP path switching behavior.

### DISCLOSURE

### TECHNICAL SOLUTION

In one embodiment, a method, by an AMF, for performing communication is provided. The method may include receiving a registration request message from a UE via a new non-3GPP AN; triggering a procedure to release AN resources for the old non-3GPP access; receiving a request message for requesting the establishment of user plane resources from SMF; based on that the request message was received before non-3GPP path switching is completed, rejecting the request message; and transmitting an indication that the request message was temporarily rejected to the SMF.

In another embodiment, a device implementing the method is provided.

In one embodiment, a method is provided for a UE to perform communication. The method may include triggering a mobility registration update via the new non-3GPP access to switch traffic from the old non-3GPP access to the new non-3GPP access; and based on the trigger, transmitting a registration request message to the AMF via the new non-3GPP AN.

In other embodiments, a device implementing the method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a registration procedure to which implementations of the present disclosure is applied.
FIG. 7 shows an example in which an MA PDU session is generated.
FIG. 8 shows an example of applying the ATSSS rule to the MA PDU session.
FIG. 9 shows an example of an AN release procedure according to the first example of the present disclosure.
FIG. 10 is an example of the second example of the present disclosure applied to a service request procedure.
FIGS. 11a and 11b show examples of various examples of the present disclosure applied to a registration procedure.
FIG. 12 shows an example of a procedure performed according to an embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

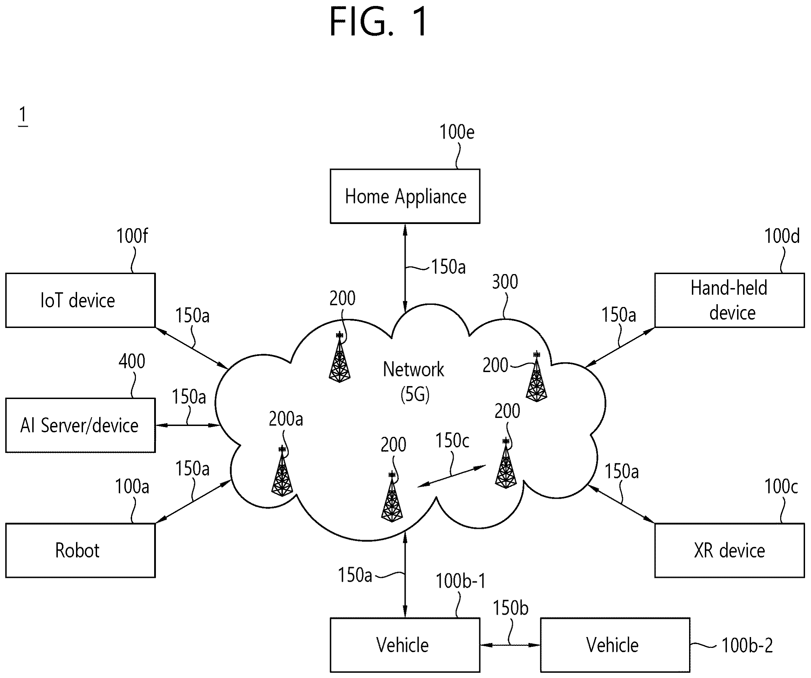

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of- Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without transmitting through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

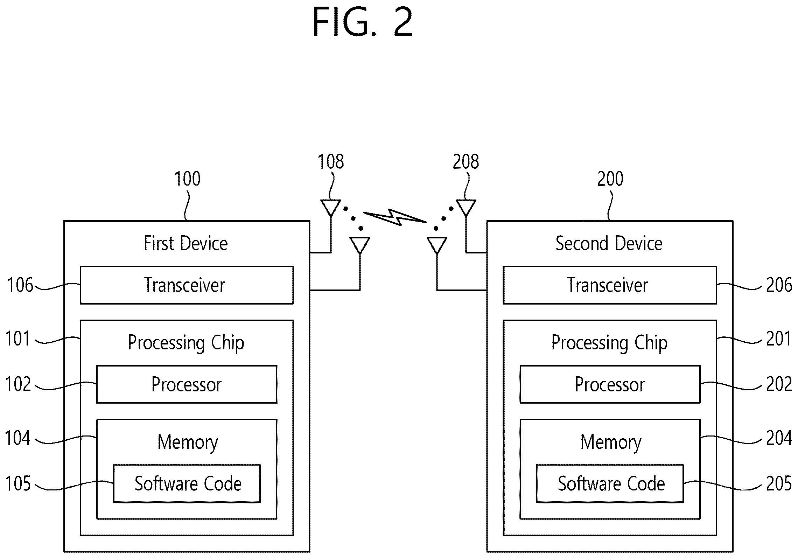

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally, and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

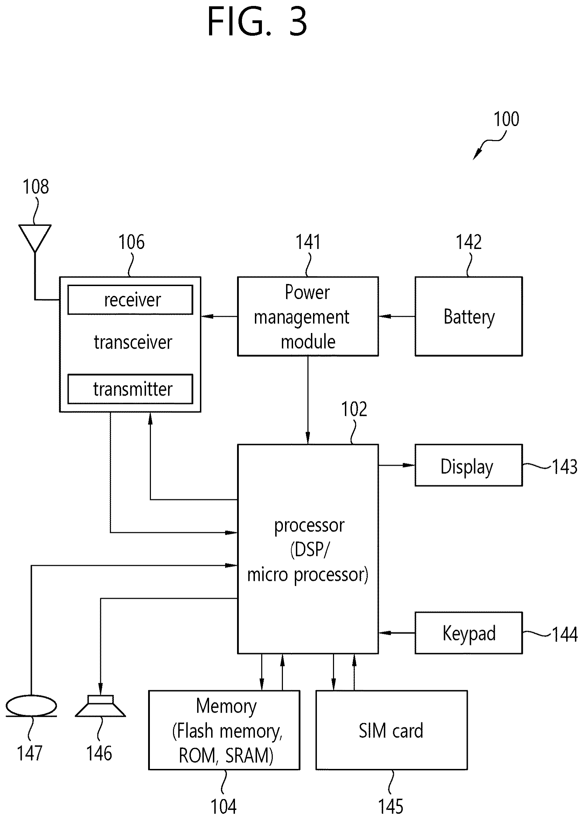

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

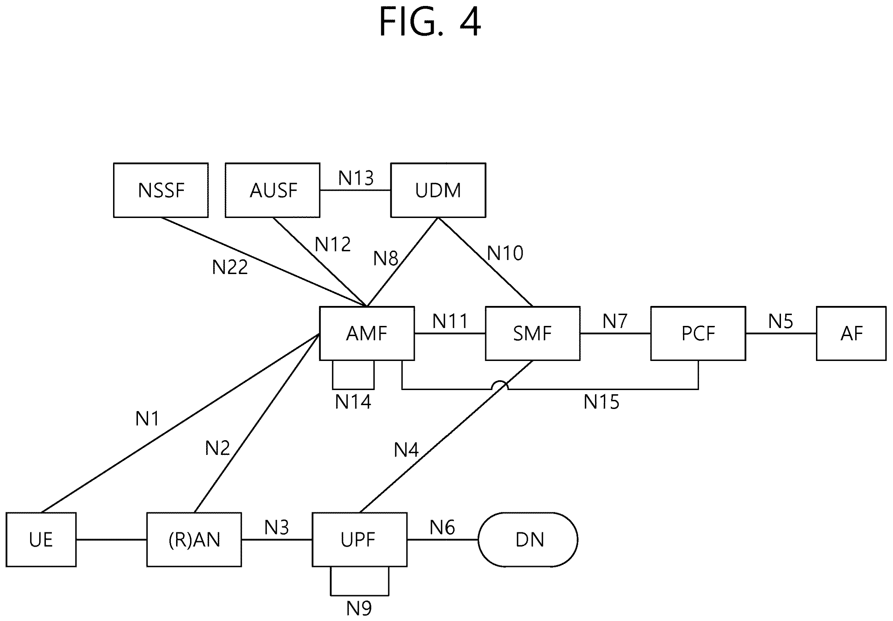

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture includes the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Section 4.2.2.2 of 3GPP TS 23.502 V16.3.0 (2019-12) can be referred.

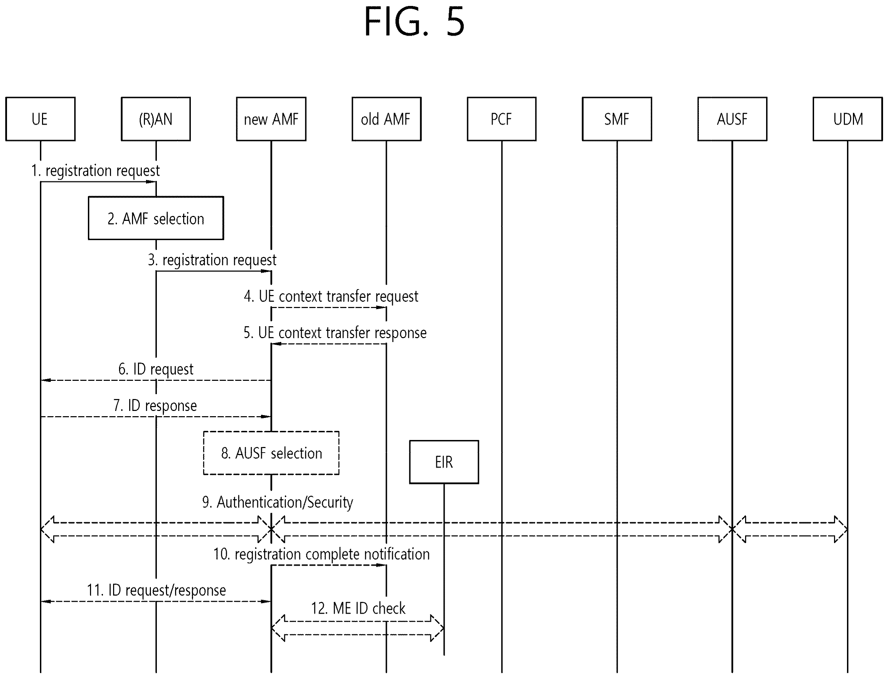

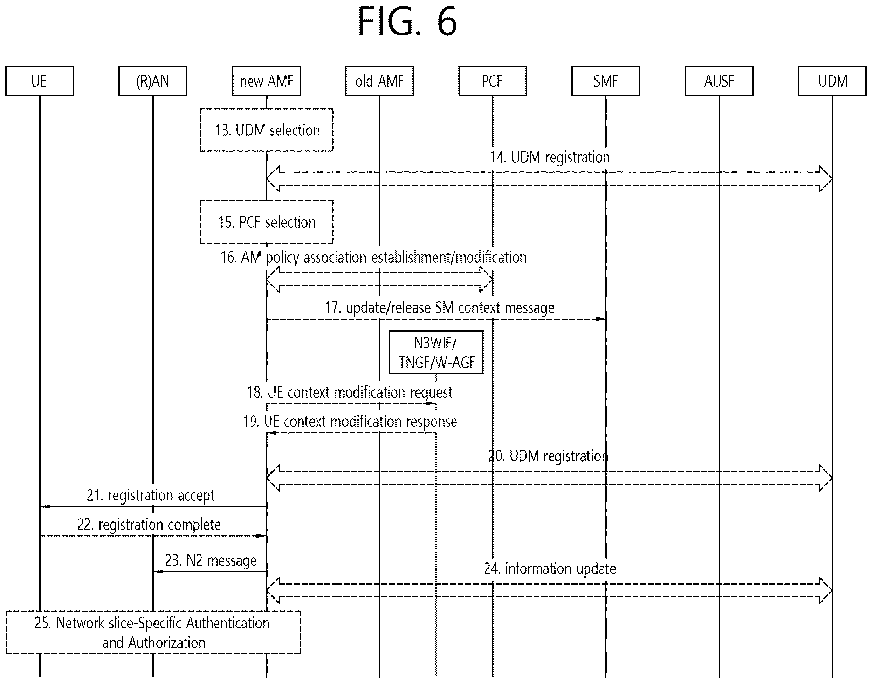

FIGS. 5 and 6 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF transmitting the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF transmitting an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may transmit a UE Context Modification Request to the N3IWF/TNGF/W-AGF.

(19) Step 19: The N3IWF/TNGF/W-AGF may transmit a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF transmits a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall transmit the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each Single Network Slice Selection Assistance Information (S-NSSAI) of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may transmit a Registration Complete message to the new AMF when it has successfully updated itself.

The UE may transmit a Registration Complete message to the new AMF to acknowledge if a new 5G-GUTI was assigned.

(23) Step 23: For registration over 3GPP Access, if the new AMF does not release the signaling connection, the new AMF may transmit the RRC Inactive Assistance Information to the NG-RAN. For registration over non-3GPP Access, if the UE is also in CM-CONNECTED state on 3GPP access, the new AMF may transmit the RRC Inactive Assistance Information to the NG-RAN.

(24) Step 24: The new AMF may perform information update towards the UDM.

(25) Step 25: The UE may execute Network Slice-Specific Authentication and Authorization procedure.

<Multi-Access (MA) PDU session>

In the prior art, the MA PDU session is a session that can be serviced simultaneously with 3GPP access and non-3GPP access using one PDU session.

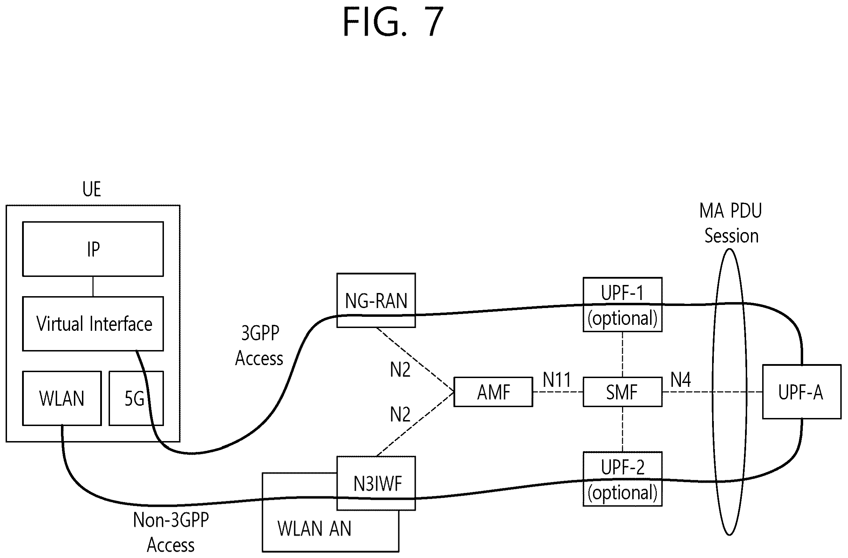

FIG. 7 shows an example in which a MA PDU session is generated.

In FIG. 7, the MA PDU session is one PDU session and has a separate session tunnel for each access. One is established on 3GPP access, and the other PDU session is established on untrusted non-3GPP access (e.g., WLAN AN).

Since the MA PDU session is one session, the MA PDU session has the following characteristics.
(i) one DNN;
(ii) one UPF Anchor (UPF-A);
(iii) one PDU type (e.g., IPv6);
(iv) one session IP address
(v) one SSC mode
(vi) one HPLMN S-NSSAI.

The MA PDU session enables a multipath data link between the UE and UPF-A. This can be implemented below the IP layer.

A MA PDU session may be established through one of the following procedures.
(i) It can be established through two separate PDU session establishment procedures. This is called individual establishment.
(ii) It may be established through one MA PDU session establishment procedure. That is, the MA PDU session is simultaneously established in two accesses with one session establishment request. This is called binding establishment.

After the MA PDU session is established, Session Management (SM) signaling related to the MA PDU session may be transmitted and received through random access.

### A. Individual establishment of MA PDU session

A MA PDU session may be established through two separate PDU session establishment procedures. For example, the UE may establish a MA PDU session on 3GPP access, and then perform a PDU session establishment procedure on non-3GPP access in order to add non-3GPP access to the MA PDU session created on 3GPP access. The request type in the establishment request message for adding the second access may be set to "MA PDU Request".

### B. Binding establishment.

A MA PDU session may be simultaneously established for 3GPP access and non-3GPP access through one procedure. Such one procedure may be referred to as a MA PDU session establishment procedure by UE request. The above procedure may be useful when the UE intends to establish a MA PDU session while the UE is already registered with 5GC through two accesses. Instead of performing two separate PDU session establishment procedures, the UE may establish a MA PDU session by performing one MA PDU session establishment procedure.

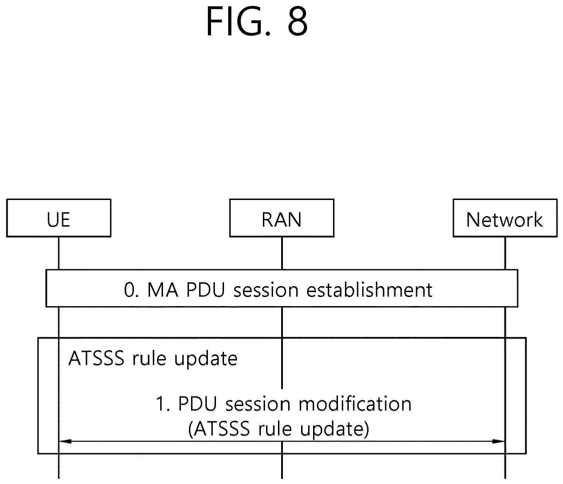

FIG. 8 shows an example of applying the ATSSS rule to the MA PDU session.

Referring to FIG. 8 , if the SMF wants to move an IP flow transmitted to non-3GPP access to 3GPP access in a state in which a multi-access (MA) PDU session is established, through 3GPP access, updated ATSSS (Access Traffic Steering, Switching and Splitting) rules can be transmitted.

Support for ATSSS in 5G system architecture is currently under discussion.

With ATSSS functionality, it is generally possible to communicate simultaneously between a UE and a UPF via multiple paths using one 3GPP access path and one non-3GPP access path. 5G systems can provide services with improved user experience by utilizing simultaneous communication via multiple paths, distribute traffic across multiple accesses in a policy-based manner, and provide new high-speed data services.

The purpose of these discussions is to further study improvements and optimizations to ATSSS and support additional deployment scenarios, as detailed below. Details on the rationale can also be found in the discussion document for S2-2105753.

- During the Rel-17 research and ATSSS standardization phase, certain scenarios were excluded from the ATSSS functionality, and some improvements were postponed to later releases. Examples include:
1) MA PDU sessions using Branching Point or UL Classifier are not supported. TS 23.501 states, "In this specification release, MA PDU sessions using IPv6 multi-homing or UL Classifier are not specified." However, in some scenarios (e.g., ATSSS support for edge computing services), it may be useful to specify how MA PDU sessions may support Branching Point or UL Classifier.
2) QUIC-based steering for non-TCP traffic was studied in Rel-17, but this steering feature was not fully defined.

For reference, the following aspects of QUIC-based steering functionality may be considered:
a) Whether to apply other IETF protocols such as the MASQUE protocol defined in draft-ietf-masque-connect-udp or the tunnel protocol defined in draft-piraux-quic-tunnel to QUIC-based steering functionality.
b) Whether a single multi-path QUIC connection may support one or more steering modes. If a single steering mode per multi-path QUIC connection is supported, the QUIC-based steering feature should support one multi-path QUIC connection per QoS flow and steering mode.
c) How to minimize additional overhead. This can be achieved, for example, by using header compression or as described in draft-ietf-masque-connect-udp.
d) Details on how reflective QoS can be applied to traffic routed by the QUIC-based steering feature.
e) Whether the QUIC-based steering feature supports only UDP traffic or also other types of traffic (e.g., IP and/or Ethernet traffic).

Therefore, the QUIC-based steering feature should be fully defined, and the above aspects should be addressed in Rel-18. This study may also consider the latest developments in the IETF, such as the progress of draft-ietf-masque-connect-udp and draft-cms-masque-connect-ip. It is considered beneficial to study ATSSS solutions based on well-known and widely used IETF protocols that are readily available, such as MPTCP for TCP traffic and QUIC for non-TCP traffic.

In addition, the DCCP protocol may be considered as another method to support the distribution of non-TCP traffic across multiple accesses.

3) Rel-17 ATSSS study considered a duplicate steering mode; in this solution, the transmitter (UE or UPF) decides to enable or disable packet transmission duplication (i.e., packet replication on both accesses) based on performance measurements and thresholds. However, this solution was not fully specified, as the type of ATSSS rules required for duplicate operation and the detailed operation of the UE/UPF were not fully specified. In addition, additional mechanisms for enabling/disabling packet duplication (e.g., triggers from AF/streaming servers) were not considered. Interest in redundancy steering mode is being revived to improve the stability and latency of live video streams. Therefore, research on redundancy steering mode should be continued and fully specified, and then a decision can be made on whether to include this steering mode in the Rel-18 standard specifications.

4) If the UE is idle state via 3GPP access and leaves the LADN service area, the UE may (but should not) continue to exchange data via non-3GPP access. To prevent this issue, Rel-17 decided to prohibit MA PDU sessions for LADN. To avoid this restriction, a solution is required that enables ATSSS support when the UE accesses services via the Local Area Data Network (LADN).

The following new ATSSS use cases and deployment scenarios have been identified and should be studied:
5) Currently, the ATSSS function only supports traffic distribution between one 3GPP access path and one non-3GPP access path. However, in some scenarios, it is desirable to distribute traffic to different types of access paths as follows (see use case in S2-2105753):
- Two non-3GPP access paths, e.g., one path using NWu via SNPN and the other using NWt via trusted non-3GPP access.
- Two 3GPP access paths in two different PLMNs (e.g., a path using 3GPP NTN access via PLMN 1 and another path using 3GPP TN access via PLMN 2);
- Two 3GPP access paths in the same PLMN (e.g., one path using LTE/EPC and another using NR/5GC).

It is desirable to study whether and how ATSSS can be applied to the above scenarios.

6) Currently, the ATSSS function supports MA PDU sessions with one non-3GPP access path via 5GC and one 3GPP access path via EPC. However, there is interest in studying how to extend the interworking with EPC functionality to support MA PDU sessions with one 3GPP access path via 5GC and one non-3GPP access path via EPC.

For the ATSSS functionality, the following topics need to be investigated to improve the ATSSS functionality:
1. Study how to support a new steering function that can steer/switch/split non-TCP traffic flows (e.g., UDP traffic flows and IP traffic flows). Specifically:
   1.1 Continue the study of QUIC-based steering functionality performed in Rel-17, taking into account unresolved aspects (see TR 23.700-93, Section 8.2). Resolving these aspects may lead to new solutions that support packet-by-packet splitting in addition to those specified in TR 23.700-93.
   1.2 Research a new steering function based on the DCCP protocol and multipath extension to support packet-by-packet splitting.
   The conclusion of the research shall identify which of the two steering functions above can be specified in the standardization phase.
2. Research methods to support duplicate traffic steering. This applies to both GBR and non-GBR traffic.
3. Study ways to enable MA PDU sessions to support more types of access paths, as defined below.
   3.1 Study ways to switch MA PDU session traffic between two non-3GPP access paths in the same PLMN. Consider the following cases:
   a) Traffic is switched between a non-3GPP access path from the UE to the N3IWF of PLMN-1 and a non-3GPP access path from the UE to the TNGF of PLMN-1. In the present disclosure, non-3GPP, non-3GPP, and N3GPP all have the same meaning.

The UE registration via two non-3GPP access paths in PLMN-1 is maintained only for the duration necessary to switch the traffic from the source non-3GPP access path to the destination non-3GPP access path. After the traffic is switched, only one UE registration via non-3GPP access may exist.

In addition, the UE may also connect directly to PLMN-1 using 3GPP radio technology. In this case, the MA PDU session may have three connection paths for the duration necessary to transfer traffic from the source non-3GPP access path to the destination non-3GPP access path. The existing steering mode and existing steering functionality must be reused, and potential improvements should be considered to support the case described above (bullet point a) if necessary.

4. Methods for supporting MA PDU sessions with one 3GPP access path via 5GC and one non-3GPP access path via ePDG/EPC may be studied. Existing standards support MA PDU sessions with one non-3GPP access path via 5GC and one 3GPP access path via EPC.

For each of the above objectives, the conclusion of the study identifies whether a solution is needed at the standardization stage and, if so, the solution to be considered at the standardization stage.

The following issues may be discussed.

Issues may include, for example, traffic switching between MA PDU sessions between two non-3GPP access paths.

This issue aims to study how MA PDU session data traffic can be switched between one non-3GPP access path (from UE to N3IWF in PLMN) and another non-3GPP access path (from UE to TNGF in the same PLMN).

The following topics are considered:
- How a UE registers with the 5GC to switch traffic from one non-3GPP access path to another non-3GPP access path.
- How to switch traffic of MA PDU sessions between the connection path from a UE in one non-3GPP access path to N3IWF and the connection path from a UE in another non-3GPP access path to TNGF in the same PLMN. This includes how the UE and the network decide on the traffic switch.
- Methods for reusing existing steering modes and steering functions, as well as new steering modes and steering functions, or modifying them to enable traffic to be switched from one non-3GPP access path to another, if necessary, may be discussed.

The study of the above topic is based on the following assumptions:
- Both non-3GPP access paths pass through the same PLMN.
- One non-3GPP access path uses N3IWF and the other non-3GPP access path uses TNGF.
- After traffic switching, only one UE registration via non-3GPP access may exist.
- If the UE can connect directly to the same PLMN using 3GPP radio technology, the UE may have MA PDU sessions with three connection paths (two non-3GPP and one 3GPP) while switching traffic from the source non-3GPP access path to the destination non-3GPP access path.
- The impact on the UE and network shall be minimized.

NOTE: It may also be considered whether traffic switching between one non-3GPP access path (e.g., from UE to N3IWF) and another non-3GPP access path (e.g., from UE to TNGF) is possible for a single access PDU session.

The following examples were discussed regarding these issues.

The following example illustrates how to resolve issues related to traffic switching of MA PDU sessions between two non-3GPP access paths.

The following principles may be supported:
1) Path switching between non-3GPP accesses is performed during the registration procedure. The UE may send a registration request message containing the registration type value set to "mobility registration update" and, optionally, a new parameter indicating "non-3GPP path switching" via the target non-3GPP access network. In addition, the UE may request user plane establishment using the "PDU session to be activated" parameter. There are two options for non-3GPP path switching:
   - Non-3GPP path switching may be performed without releasing AN resources for the old non-3GPP access during the switching procedure. In this option, the user plane resources for the old non-3GPP access are maintained until the user plane resources for the new non-3GPP access are configured.
   - Non-3GPP path switching may be performed by releasing AN resources for the old non-3GPP access during the switching procedure. In this option, user plane resources for the old non-3GPP access are released first, and then user plane resources are configured through the new non-3GPP access.
   - If the PLMN of the selected target non-3GPP Access Network (AN) is different from the PLMN of the source non-3GPP AN, the UE does not perform non-3GPP path switching.
2) After the data traffic is switched to the new non-3GPP connection, the AMF updates the registration for the non-3GPP access with the UDM via Nudm_UECM_Registration.
3) Path switching between two non-3GPP accesses (e.g., from a trusted connection to a trusted connection, from a trusted connection to an untrusted connection, from an untrusted connection to a trusted connection, or from an untrusted connection to an untrusted connection) shall be supported, except for wired connections.
4) Function exchange between the UE and the network is performed.
   - If the AMF supports non-3GPP path switching, the AMF indicates during the registration procedure whether it supports non-3GPP path switching for the UE.
   - During MA PDU session establishment, the UE indicates to the AMF whether it supports non-3GPP path switching.
   - If the AMF supports non-3GPP path switching, the AMF selects an SMF that supports non-3GPP path switching and indicates to the SMF whether the UE supports non-3GPP path switching when the AMF sends a PDU session establishment request message.
   - If AMF and SMF support non-3GPP path switching, SMF indicates in the PDU session configuration approval message whether the network supports non-3GPP path switching.
5) When the UE performs non-3GPP path switching, the UE shall include the ID of the MA PDU session configured in the "list of PDU sessions to be activated."
   NOTE: Whether the UE may indicate the SA PDU session in the "list of PDU sessions to be activated" may be determined at a later date. This allows the SA PDU session to be transferred between non-3GPP accesses.
6) When non-3GPP path switching is performed:
   - The UE may perform non-3GPP path switching when the UE receives a capability indication during the registration procedure. Here, the capability indication may be an indication that supports non-3GPP path switching.
   - A. When switching non-3GPP paths without releasing AN resources for the old non-3GPP access during the handover procedure
   - The UE performs a mobility registration procedure including a "non-3GPP path switching" indication when it supports maintaining the old non-3GPP access while performing registration through the new non-3GPP access.
   - If the UE cannot maintain the connection through the old non-3GPP access while performing registration through the new non-3GPP access, the UE does not provide the "non-3GPP path switching" indication.
   - If the AMF receives a registration request message with a "non-3GPP path switching" indication and supports maintaining the old non-3GPP N2 connection while establishing a new non-3GPP N2 connection, the AMF shall include a "non-3GPP path switching" indication in the Nsmf_PDUSession_UpdateSMContext request without triggering the release procedure for the old non-3GPP access. "non-3GPP path switching" indication in the Nsmf_PDUSession_UpdateSMContext request. Upon receiving this indication, the SMF does not release the old user plane resources for the old non-3GPP access.
   - Once user plane resources are configured via the new non-3GPP access, the UE and UPF start transmitting traffic via the new non-3GPP access. No enhancement of ATSSS rules and N4 rules is required to support non-3GPP path switching.
   - The AMF updates the UDM and triggers the release procedure for the old non-3GPP access.
   - The AMF may send a registration accept message to the UE.
   - B. For non-3GPP path switching that releases AN resources via old non-3GPP access during the switching procedure
   - The UE may perform the mobility registration procedure without including the "non-3GPP path switching" indication.
   - When the AMF receives a registration request message without the "non-3GPP path switching" indication, the AMF triggers the release procedure for the old non-3GPP access before notifying the SMF about user plane activation on the new non-3GPP access.
   - Once the user plane resources are configured via the new non-3GPP access, the UE and UPF start transmitting traffic via the new non-3GPP access. No enhancement of ATSSS rules and N4 rules is required to support non-3GPP path switching.
   - The AMF may update the UDM and send a registration accept message to the UE.
   - If the AMF receives a registration request message with a "non-3GPP path switching" flag and does not support maintaining the old non-3GPP N2 connection while configuring a new non-3GPP N2 connection, the AMF may trigger the AN release procedure before triggering the activation of the new N2 connection. During the AN release procedure, the AMF can notify the SMF before sending an N2 release request to the old non-3GPP AN.

NOTE: Non-3GPP access switching may refer to switching between two different RAT types. For example, it may be switching from a trusted N3GPP access to an untrusted N3GPP access, or vice versa. Alternatively, scenarios where a UE moves two IPsec peers simultaneously within the same RAT type (e.g., changing the UE local IP address and anchor N3IWF/TNGF) or changing to a different N3IWF/TNGF without changing the UE local IP address may be supported. This is because scenarios where the UE moves without changing the N3GPP access node anchor are supported based on RFC 4555 MOBIKE, which is supported in IKEv2 starting from Rel-15.

An example of the registration procedure for non-3GPP access path switching is as follows.

UE supports non-3GPP access path switching and the network indicates that it supports non-3GPP access path switching as described in section 4.22.2 of TS 23.502 V18.0.0. In this case, the UE may trigger a mobility registration update via the new non-3GPP access to switch traffic from the old non-3GPP access (i.e., TNGF or N3IWF) to the new non-3GPP access (i.e., TNGF or N3IWF). In this case, the registration procedure described in TS 23.502 V18.0.0 Section 4.22.9.1 applies with the following differences and explanations:
- When the UE transmits a registration request message, the following may apply. For example, the UE may wants to switch the user plane from an old non-3GPP access to a new non-3GPP access to which mobility registration updates are sent. In this case, the UE indicates the PDU session ID of the PDU session to be activated in the list of PDU sessions to be activated. This may include both PDU session IDs corresponding to MA PDU sessions and single access PDU sessions.

In addition, the UE may provide an indication("non-3GPP path switching while using old AN resources") in the registration request message to indicate that the UP connection via the old non-3GPP access may continue to be used for MA PDU sessions during the registration procedure. If the UE cannot use an UP connection via an old non-3GPP access during the registration procedure, the UE does not provide the "non-3GPP path switching while using old AN resources" indication.

If the PLMN of the selected new non-3GPP access is different from the PLMN of the old non-3GPP access, the UE does not perform non-3GPP access path switching.
- If, in step 3, the UE provided the indication in step 1 ("Non-3GPP path switching while using old AN resources") and the AMF supports maintaining two N2 connections for non-3GPP access during the registration procedure, the AMF delays the release of the old N2 connection until the UP connection through the new non-3GPP access is configured. Otherwise, the AMF shall proceed with the registration procedure for the new non-3GPP access as described in TS 23.502 V18.1.0 4.12.4.2 for unreliable non-3GPP access and 4.12a for reliable non-3GPP access. As described in 4.2, the release of the old non-3GPP access may be triggered before proceeding with the registration procedure for the new non-3GPP access, and the following differences may apply:
   - During the AN release procedure, the AMF shall inform the SMF to release the UP resources for the activated PDU sessions before sending the N2 UE context release command to the old non-3GPP access.
   - In step 17, the registration procedure is triggered to switch traffic from the old non-3GPP access to the new non-3GPP access, and the UE provides the indication "Non-3GPP path switching while using old AN resources") and the AMF supports maintaining two N2 connections for non-3GPP access, the PDU session is a MA PDU session, and this indication is forwarded to the SMF. Upon receiving this indication, the SMF does not trigger the release of the UP connection from the previous non-3GPP access (if present).
   - Once the UP connection is established via the new non-3GPP access, the UE and UPF start transmitting traffic via the new non-3GPP access.
   - After the UP connection is configured on the new non-3GPP access, the AMF may trigger the AN release procedure for the previous non-3GPP access (e.g., previous N3IWF or TNGF) if it has not been done previously.

NOTE: In order to support RAT restrictions for non-3GPP access in the above procedure, the UDM shall be considered to have provided the restricted non-3GPP RAT types (if any) in the RAT restriction parameter of the AM subscriber data. In order to avoid violating RAT restrictions when a PDU session is configured in the LBO roaming scenario, the following may apply. Unless the roaming agreement specifies that non-3GPP path switching is supported for the UE, the AMF of the VPLMN may be configured not to indicate support for non-3GPP path switching for inbound roaming UEs during the configuration of MA PDU sessions for the SMF of the VPLMN.

According to the above, there are two main examples of registration procedures for non-3GPP path switching. For example, the operation may change depending on whether the terminal transmits the "Non-3GPP path switching while using old AN resources" indication. For example, the terminal may transmit data simultaneously from the old non-3GPP access and the new non-3GPP access. In this case, the terminal may transmit the "Non-3GPP path switching while using old AN resources" indication to the AMF so that switching is performed without interrupting data transmission.

During N3GPP path switching, the terminal may not transmit the "Non-3GPP path switching while using old AN resources" indication. In this case, the AMF first performs the AN release procedure for the old non-3GPP access. In this case, the terminal may be transmitting and receiving data through the old non-3GPP access. In this situation, when the AMF performs AN release, the SMF may perform the procedure for PDU session activation again to the AMF before non-3GPP path switching is completed due to the data transmitted to the UPF. In this case, since the AMF has not yet completed path switching, the problem occurs that PDU session activation is performed again to the old non-3GPP access. The present disclosure proposes a method for solving this problem.

Various examples of the present disclosure may include the following operations. When SMF requests user plane setup during non-3GPP path switching, AMF rejects SMF's request. SMF performs a re-request when it receives a message from AMF.

Various examples of the present disclosure propose the following methods to solve the problems.

The methods presented below can be performed or used in combination or as complementary measures. The following proposals are based on non-3GPP access, but similar methods may be applied to 3GPP access. In addition, although the various examples in the present disclosure assume access switching for MA PDU sessions, this is only an example, and the explanations of access switching for MA PDU sessions in the various examples in the present disclosure may also apply to general PDU sessions when access switching occurs. PDU Session activation is used interchangeably with user plane resource establishment/setup. PDU Session deactivation is used interchangeably with user plane resource release.

The first and second examples of the present disclosure will be described below. The operations described in the first and second examples of the present disclosure may be combined.

The first example of the present disclosure is described below.

The first example of the present disclosure may include an operation in which AMF transmits a specific cause/indication to SMF during the AN release process. By transmitting a specific cause/indication, AMF may temporarily prevent PDU session activation.

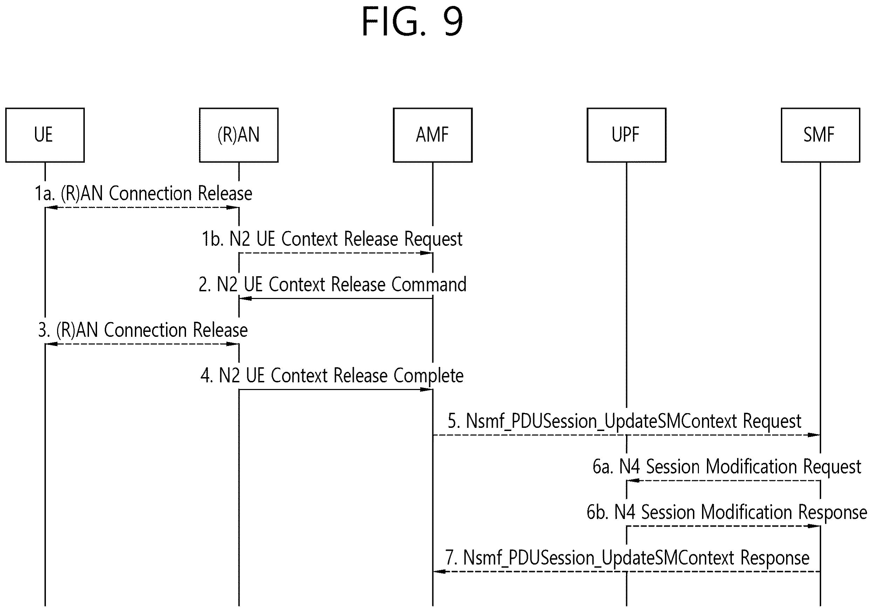

The first example of the present disclosure is described with reference to FIG. 9.

The following drawings are provided to explain specific examples of the present disclosure. The names of specific devices, signals, messages, and fields shown in the drawings are provided as examples, and the technical features of the present disclosure are not limited to the specific names used in the following drawings.

**FIG. 9** **shows an example of an AN release procedure according to the first example of the present disclosure.**

FIG. 9 shows an example of the AN release procedure. Based on the procedure shown in FIG. 9, the AMF may perform the AN release procedure for the old non-3GPP access for non-3GPP path switching.

For reference, the AMF may perform steps 5 to 7 first, and then perform the operation according to steps 2 to 4.

For example, for untrusted non-3GPP access, as described in TS23.502 V18.0.0 S4.12.4.2, and for trusted non-3GPP access, as described in section 4.12a.4.2, AN release may be triggered. For example, the AMF may trigger an AN release for old non-3GPP accesses before proceeding with the registration procedure for new non-3GPP accesses:
- During the AN release procedure, the AMF notifies the SMF to release the UP resources of the activated PDU session before transmitting the N2 UE context release command to the old non-3GPP access.

During this process, the AMF may additionally transmit an specific cause (new cause or existing cause, e.g., UE is unreachable) or indication to the SMF while performing step 5. Accordingly, the AMF may instruct the SMF not to request user plane resource setup due to downlink data for a while. At this time, the AMF may directly inform the SMF that the terminal is performing non-3GPP path switching (or AN switching). Alternatively, the AMF may request the SMF to suspend the user plane resource setup/PDU session activation request. Alternatively, the AMF may indirectly inform the SMF that it cannot perform user plane resource setup. For example, the AMF may inform the SMF that the terminal is unreachable. Based on the information, cause, indication, etc. received based on the examples described above, even if the SMF receives a data notification for downlink data for the PDU session from the UPF, the SMF may not perform PDU session activation.

After performing non-3GPP path switching, the AMF may perform the following operations, as shown in the examples below. For example, the AMF may notify the SMF that the non-3GPP path switching (or AN switching) of the terminal has been completed. Alternatively, the AMF may request the SMF to resume the user plane resource setup/PDU session activation request. Alternatively, the AMF may notify the SMF that the terminal has become reachable. If user plane setup for the PDU session has been performed for the new non-3GPP access during the non-3GPP path switching process, the AMF may not provide information to the SMF for the PDU session.

A specific example of the AN release procedure according to FIG. 9 is as follows.
1. When (R)AN conditions are confirmed (e.g., wireless link failure) or for other (R)AN internal reasons, (R)AN may decide to initiate UE context release from (R)AN. In this case, (R)AN may transmit an N2 UE context release request (cause, list of PDU session IDs with activated N3 user planes) message to AMF. The cause indicates the reason for the release (e.g., AN link failure, O&M intervention, unspecified error, etc.). The PDU session ID list indicates the PDU sessions provided by the UE's (R)AN. The (R)AN may send an N2 UE context release request message to the AMF.
2. The AMF may transmit an N2 UE context release command message to the (R)AN. An internal AMF event may occur, such as the AMF receiving an N2 UE context release request message or receiving a service request or registration request for configuring another NAS signal connection via the (R)AN. In this case, the AMF may transmit an N2 UE context release command message (including Cause) to the (R)AN. Cause indicates the cause from the (R)AN in Step 1 or the cause due to an AMF event.
3. [Conditional operation] If the (R)AN connection (e.g., RRC connection or NWu connection) with the UE has not yet been released, one of the following may be performed:
   a) The (R)AN requests the UE to release the (R)AN connection. Upon receiving confirmation of the (R)AN connection release from the UE, the (R)AN deletes the UE context, or
   b) If the cause of the N2 UE context release command indicates that the UE has already released the RRC connection locally, the (R)AN releases the RRC connection locally.
4. The (R)AN confirms the N2 release by transmitting an N2 UE context release complete message (including the activated N3 user plane, user location information, and a list of PDU session IDs with location information age) to the AMF. The PDU session ID list represents the PDU sessions provided by the UE's (R)AN. The AMF always stores the latest UE radio functionality information or NB-IoT-specific UE radio access functionality information received from the NG-RAN node. The N2 signaling connection between the AMF and the (R)AN for the UE is released. If the UE is served by an NG-eNB that supports WUS, the NG-eNB shall include the recommended cell and RAN node information for paging, otherwise the (R)AN may provide the AMF with a list of recommended cells/TA/NG-RAN node identifiers for paging.
5. [Conditional] The AMF may transmit an Nsmf_PDUSession_UpdateSMContext request message to the SMF.

For example, for each PDU session of N2 UE context release complete, the AMF may invoke the Nsmf_PDUSession_UpdateSMContext request (including PDU session ID, PDU session deactivation, cause, operation type, user location information, location information age, and N2 SM information (auxiliary RAT usage data)). The cause in step 5 is the same as the cause in step 2. If step 1b includes a list of PDU session IDs with active N3 user planes, steps 5 to 7 are performed before step 2. The operation type is set to "UP deactivation" to indicate the deactivation of user plane resources for the PDU session.

6a [Conditional operation] SMF may transmit an N4 Session Modification request message (AN or N3 UPF Tunnel Info to be removed, Buffering on/off) to UPF.

6b. [Conditional operation] UPF may transmit an N4 Session Modification response message to SMF. The N4 Session Modification response message may indicate that the SMF request is approved.

7. [Conditional operation] SMF may transmit an Nsmf_PDUSession_UpdateSMContext response message to AMF.

In order for the method according to the first example of the present disclosure to be supported, the SMF may need to support a new cause/indication. Therefore, SMFs that manage single access PDU sessions rather than MA PDU sessions may not be able to use this method. However, since the AMF can immediately provide information during the AN release process, it is possible to prevent the SMF from generating unnecessary signaling during non-3GPP path switching.

The second example of the present disclosure is described below.

The second example of the present disclosure includes an operation in which, when SMF requests N2 information transmission to AMF, the AMF rejects the request. For example, when the AMF transmits a reject message to SMF, the AMF may transmit a specific cause/indication. Accordingly, the AMF may temporarily prevent PDU session activation.

The AN release procedure may be performed in the same manner as in the first example of the present disclosure. However, the following description focuses on the differences from the first example of the present disclosure.

The SMF may request the AMF to transmit N2 information in order to request user plane setup due to downlink data. In this case, the AMF may reject the request.

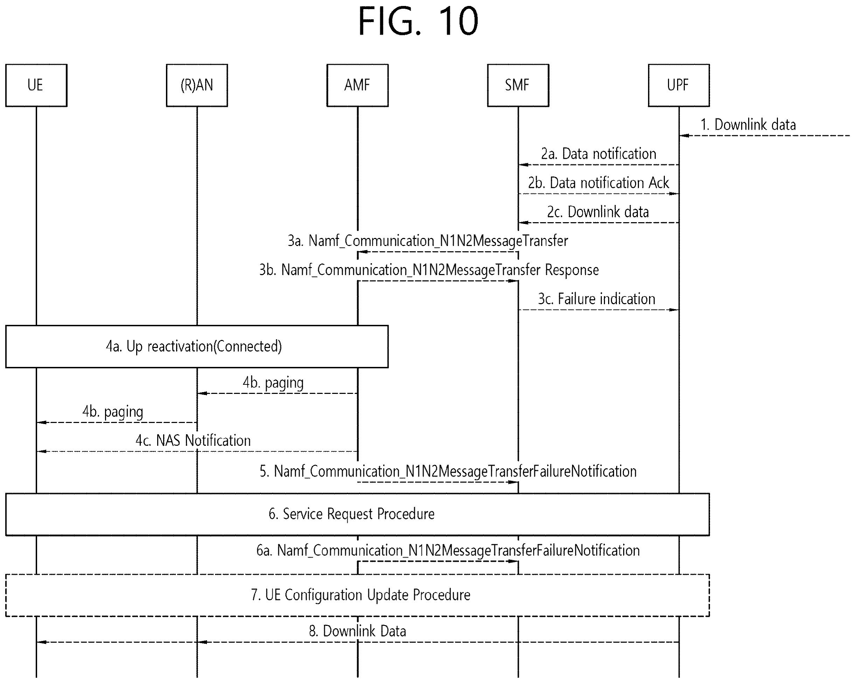

The second example of the present disclosure will be described below with reference to FIG. 10.

The following drawings are provided to explain specific examples of the present disclosure. The names of specific devices, signals, messages, and fields shown in the drawings are provided as examples, and the technical features of the present disclosure are not limited to the specific names used in the following drawings.

**FIG. 10** **is an example of the second example of the present disclosure applied to a service request procedure.**

FIG. 10 shows an example of a network triggered service request procedure.
**1. The UPF may receive downlink data.**

**For example, the UPF may receive downlink data for a PDU session. If there is no AN tunnel information stored in the UPF for the PDU** session, the UPF may buffer the downlink data (steps 2a and 2b) or forward the downlink data to the SMF (step 2c) according to the SMF's command.

2a. The UPF may transmit a data notification message to the SMF. For example, the data notification message may include an N4 session ID, information for identifying the QoS flow of the DL data packet, DSCP, etc.

2b. The SMF may transmit a data notification acknowledgment message to the UPF.

2c. If the SMF instructs the UPF to forward the downlink data packet (i.e., if the SMF buffers the data packet), the UPF may forward the downlink data packet to the SMF.

3a. [Conditional operation] The SMF may transmit a message based on Namf_Communication_N1N2MessageTransfer to the AMF. For example, Namf_Communication_N1N2MessageTransfer may include SUPI, PDU session ID, N1 SM container (SM message), N2 SM information (QFI, QoS profile, CN N3 tunnel information, S-NSSAI), N2 SM information validity area, ARP, paging policy indicator, 5QI, N1N2TransferFailure notification destination address, and extended buffering support. Alternatively, NF may transmit Namf_Communication_N1N2MessageTransfer (including SUPI and N1 message) to AMF.

3b. [Conditional operation] The AMF responds to the SMF. For example, the AMF may transmit a response message to the SMF.

For example, the AMF may transmit a Namf_Communication_N1N2MessageTransfer response including an indication that the request has been temporarily rejected to the SMF. When the SMF receives the Namf_Communication_N1N2Message Transfer response, the SMF starts the locally configured guard timer and waits for a message from the AMF. When the SMF receives a message from the AMF, the SMF may invoke Namf_Communication_N1N2MessageTransfer (including N2 SM information and/or N1 SM information) again to the AMF that transmitted the message. Otherwise, the SMF performs step 3c when the guard timer expires. If the SMF determines that control plane buffering applies, the SMF may request the UPF to forward the downlink data PDU to the SMF.

3c. [Conditional operation] SMF responds to UPF. For example, SMF may transmit a response message to UPF.

SMF may receive an indication from AMF that the Namf_Communication_N1N2MessageTransfer message requested by SMF has been temporarily rejected. In this case, SMF may instruct UPF to apply temporary buffering in accordance with the network policy.

4a. [Conditional operation] In step 3a, the UE may be in the CM-CONNECTED state in the access associated with the PDU session ID received from the SMF. In this case, for this PDU session, the AMF may not transmit a paging message to the (R)AN node and UE, and steps 4 to 22 of the UE Triggered Service Request procedure (e.g., TS 23.502 V18.0.0, 4.2.3.2) may be performed (e.g,, if wireless resource configuration and user plane are enabled, an N3 tunnel may be established). In step 12 of section 4.2.3.2 of TS 23.502 V18.0.0, the AMF does not transmit a NAS service accept message to the UE. The rest of this procedure may be omitted.

4b. [Conditional operation] The UE may be in CM-IDLE state in 3GPP access. In this case, even if the PDU session ID received by the AMF from the SMF in step 3a is associated with the 3GPP access and the UE is in the CM-CONNECTED state for non-3GPP access according to the local policy, the AMF may decide to notify the UE via the 3GPP access. In this case, the AMF may send a paging message to the NG-RAN node via the 3GPP access.

4c. [Conditional operation] The UE may be registered simultaneously via 3GPP and non-3GPP accesses in the same PLMN. In this case, the UE may be in the CM-CONNECTED state on the 3GPP access, and the PDU session ID in step 3a may be associated with the non-3GPP access. Then, the AMF may send a NAS Notification message including the non-3GPP access type to the UE via the 3GPP access and configure the Notification timer. Step 5 may be omitted.

5. [Conditional operation] The AMF may transmit a Namf_Communication_N1N2Transfer failure notification to the SMF.

6. If the UE is in the CM-IDLE state in the 3GPP access, when the UE receives a paging request for a PDU session associated with the 3GPP access, the UE may perform the following operations. For example, the UE may initiate the UE Triggered Service Request procedure (TS23.502 V18.0.0 S4.2.3.2). For example, if the UE may use User Plane CIoT 5GS Optimisation and a suspended connection layer context is stored in the UE, the UE may initiate the Connection Resume in CM-IDLE with Suspend procedure (TS23.502 V18.0.0 S4.8.2.3). To support buffered data transfer, the SMF may instruct the UPF to configure a data transfer tunnel between the old UPF and the new UPF or to the PSA as described in steps 6a, 7a, and 8a of TS23.502 V18.0.0 S4.2.3.2.

6a. After receiving the paging rejection indication, the AMF may transmit a Namf_Communication_N1N2MessageTransfer failure notification to the SMF. The AMF may inform the SMF that the UE has rejected the page and that no user plane connection will be configured. The UE may remain in a connectable state for future paging attempts.

7. If the AMF invokes the UE to trigger the service request procedure, the AMF initiates the UE Configuration update procedure to assign a new 5G-GUTI. If the UE response to the service request includes a paging rejection indication, the AMF may trigger the release of the UE.

8. The UPF transmits the buffered downlink data to the UE through the (R)AN node that performed the service request procedure. If data is buffered in the SMF, the SMF forwards the buffered downlink data to the UPF.

According to step 2a of FIG. 10, the SMF may receive a Data Notification due to downlink data from UPF. Then, SMF may request AMF to transmit N2 information to AN using the Namf_Communication_N1N2MessageTrafer service for user plane resource setup (e.g., see step 3a).

For example, in step 3b of FIG. 10, the AMF may notify the SMF that the request has been temporarily rejected. The AMF may transmit "temporary reject" information during the process of performing the registration procedure when the terminal performs an AMF change. The operation of notifying temporary rejection may be applied as follows. For example, when the terminal is performing non-3GPP path switching (or AN path switching), the AMF may transmit a response message for the Namf_Communication_N1N2MessageTransfer requested by the SMF to the SMF. The AMF may include a temporarily rejected indication in the response message. By transmitting a response message including the temporarily rejected indication, the AMF may reject the request of the SMF. Alternatively, instead of the temporarily rejected indication, the AMF may use a new indication/cause as described in the examples in the first example of the present disclosure. The SMF that receives the indication, cause, etc. transmitted by the AMF may command the UPF to buffer or drop the data. Thereafter, the SMF may perform user plane setup again after the guard timer time. Once the user plane setup procedure is complete, data can be transmitted via the new non-3GPP access.

According to the second example of the present disclosure, unnecessary requests may not be performed after the AN Release procedure is performed. For example, when the SMF transmits signaling for user plane setup to the AMF due to downlink data, the operation described in the second example of the present disclosure may be performed. Then, additional request from the SMF may be prevented. The temporarily rejected indication described in the second example of the present disclosure may also be used. Compared to the method according to the first example of the present disclosure, additional signaling may be performed.

The first and second examples of the present disclosure may be used simultaneously. For example, SMFs that support non-3GPP path switching may use the method according to the first example of the present disclosure, and SMFs that do not support non-3GPP path switching (e.g., SMFs of single access PDU sessions) may use the method according to the second example of the present disclosure to reduce impact.

The following describes specific examples of operations that combine one or more of the first and second examples of the present disclosure.

The AMF may perform non-3GPP path switching without maintaining the previous access. In this case, the AMF triggers AN release for the previous access. If downlink traffic is in progress, the packets are buffered by the UPF. Due to this buffered traffic, the SMF may request the AMF to setup user plane resources before the non-3GPP switching is completed. In this case, the AMF shall reject the SMF's request until the non-3GPP access switching is completed.

The AMF may perform non-3GPP switching while maintaining the old access. In this case, the AMF may perform the AN release procedure for the existing connection after the user plane resources for the new non-3GPP access have been set. However, during the AN release procedure, the AMF shall not deactivate PDU sessions activated through the new non-3GPP access.

It is necessary to discuss whether the UE is deregistered from the previous access at any point.

When switching non-3GPP paths without maintaining previous access, the AMF may reject the SMF's request with an indication that Namf_Communication_N1N2MessageTransfer has been temporarily rejected.

When switching non-3GPP paths while maintaining existing access, the AMF may not request the SMF to deactivate the PDU sessions indicated in the "List Of PDU Sessions To Be Activated".

When the UE receives a registration acceptance message via the new non-3GPP access, it is explicitly stated that the UE is considered to have canceled its registration on the old non-3GPP access.

An example of the registration procedure for non-3GPP access path switching is as follows.

UE supports non-3GPP access path switching, and the network indicates that it supports non-3GPP access path switching as described in Section 4.22.2 of TS 23.502 V18.0.0. In this case, the UE may trigger a mobility registration update via the new non-3GPP access to switch traffic from the old non-3GPP access (i.e., TNGF or N3IWF) to the new non-3GPP access (i.e., TNGF or N3IWF). In this case, the registration procedure described in TS 23.502 V18.0.0 Section 4.22.9.1 applies with the following differences and explanations:
- In step 1, the UE may wish to switch the user plane from the old non-3GPP access to the new non-3GPP access to which the mobility registration update is sent. For reference, step 1 may correspond to step 1 in FIG. 5 and FIG. 6. That is, step 1 may include the operation of the UE transmitting a registration request message. In this case, the UE indicates the PDU session ID of the PDU session in the list of PDU sessions to be activated. This may include both the PDU session ID corresponding to the MA PDU session and the PDU session ID corresponding to the single access PDU session.

In addition, the UE may provide an indication ("non-3GPP path switching while using old AN resources") in the registration request message to indicate that the UP connection via the old non-3GPP access may continue to be used for MA PDU sessions during the registration procedure. If the UE cannot use the UP connection via the old non-3GPP access during the registration procedure, the UE does not provide the "non-3GPP path switching while using old AN resources" indication.

If the PLMN of the selected new non-3GPP access is different from the PLMN of the old non-3GPP access, the UE does not perform non-3GPP access path switching.
- If, in step 3, the UE provided the indication ("non-3GPP path switching while using old AN resources") in step 1, and the AMF supports maintaining two N2 connections for non-3GPP access during the registration procedure, the AMF delays the release of the existing N2 connection until the UP connection through the new non-3GPP access is set. Otherwise, the AMF shall proceed with the registration procedure for the new non-3GPP access as described in TS 23.502 V18.1.0 4.12.4.2 for untrusted non-3GPP access and 4.12a for trusted non-3GPP access. As described in 4.2, the release of the old non-3GPP access may be triggered before proceeding with the registration procedure for the new non-3GPP access, and the following differences may apply:
   - During the AN release procedure, the AMF shall inform the SMF to release the UP resources for the active PDU sessions before transmitting the N2 UE context release command to the old non-3GPP access.
   - Due to pending downlink data in the UPF, the SMF may request the establishment of user plane resources before non-3GPP path switching is finished. For example, the SMF may request the establishment of user plane resources by sending a message based on Namf_Communication_N1N2MessageTransfer to the AMF. In this case, the AMF may reject the request with an indication that the Namf_Communication_N1N2MessageTransfer has been temporarily rejected (e.g., indication that the Namf_Communication_N1N2MessageTransfer has been temporarily rejected). For example, the AMF may send an indication (e.g., indication that the Namf_Communication_N1N2MessageTransfer has been temporarily rejected) to the SMF. The SMF may receive a Namf_Communication_N1N2MessageTransfer response (e.g., a response message) including an indication that the request has been temporarily rejected. The SMF may start a locally configured guard timer and wait for any message from the AMF. Upon receiving a message from the AMF, the SMF may re-invoke the Namf_Communication_N1N2MessageTransfer (including N2 SM information and/or N1 SM information) to the AMF. For example, the SMF may transmit a Namf_Communication_N1N2MessageTransfer-based message (e.g., a message including N2 SM information and/or N1 SM information) to the AMF.
   - When a UP connection is established through the new non-3GPP access, the UE and UPF begin transmitting traffic via the new non-3GPP access.
   - After the UP connection is established for the new non-3GPP access, the AMF may also trigger the AN release procedure for the previous non-3GPP access (e.g., previous N3IWF or TNGF) if it has not been performed previously. Note that the following operations may be applied additionally:
      - Not included in the list of PDU sessions to be activated (e.g., List Of PDU Sessions To Be Activated) sent by the UE in step 1, but for PDU sessions marked as previous non-3GPP access in the "List of PDU Session ID(s) with active N3 user plane" (e.g., List of PDU Sessions To Be Activated), the AMF may request the SMF to deactivate the PDU sessions. For other PDU sessions, the AMF does not request the SMF to deactivate the PDU sessions.
      - When the UE receives a registration acceptance through a new non-3GPP access, the UE may consider that the registration has been deregistered from the old non-3GPP access.

NOTE: In order to support RAT restrictions for non-3GPP access in the above procedure, the UDM shall be considered to have provided the restricted non-3GPP RAT types (if any) in the RAT restriction parameter of the AM subscriber data. In order to avoid violating RAT restrictions when a PDU session is configured in the LBO roaming scenario, the following may apply. Unless the roaming agreement specifies that non-3GPP path switching is supported for the UE, the AMF of the VPLMN may be configured not to indicate support for non-3GPP path switching for inbound roaming UEs during the configuration of MA PDU sessions for the SMF of the VPLMN.

In step 17, the registration procedure is triggered to switch traffic from the old non-3GPP access to the new non-3GPP access, and the UE may provide an indication in step 1 ("Non-3GPP path switching while using old AN resources"). In this case, if the AMF supports maintaining two N2 connections for non-3GPP access, the AMF forwards the indication to the SMF if the PDU session is an MA PDU session. When the SMF receives the indication, it does not trigger the UP connection release from the previous non-3GPP access (if any).

The following drawings are provided to explain specific examples of the present disclosure. The names of specific devices, signals, messages, and fields shown in the drawings are provided as examples, and the technical features of the present disclosure are not limited to the specific names used in the following drawings.

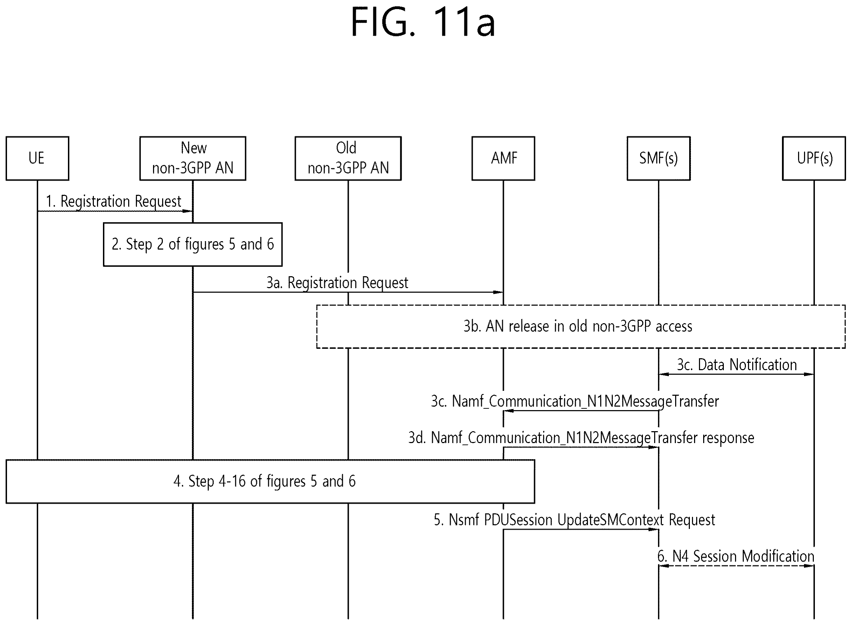

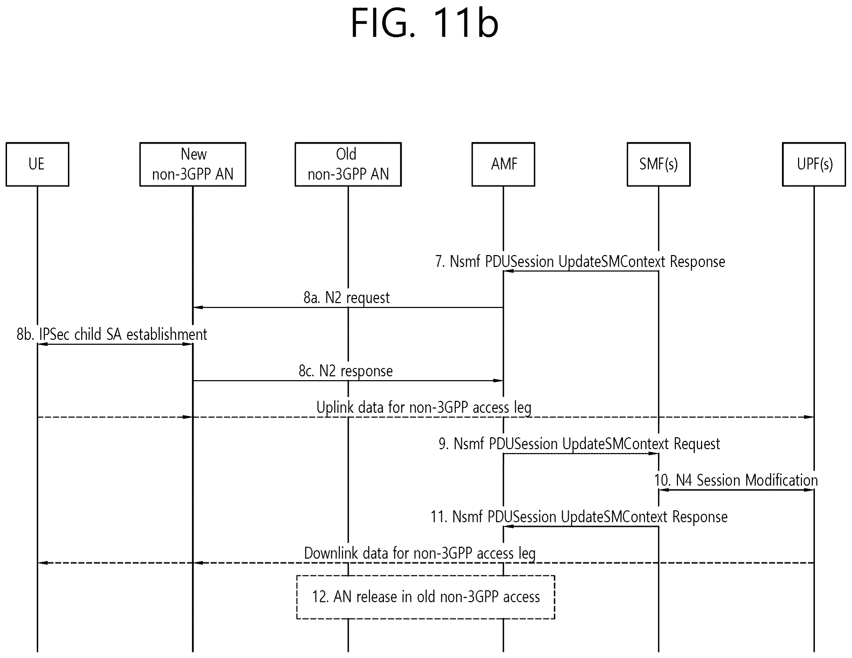

**FIGS. 11a** **and** **11b** **show examples of various examples of the present disclosure applied to a registration procedure.**

FIG. 11a and FIG. 11b are examples of a mobility registration procedure for non-3GPP access path switching.

UE may support non-3GPP access path switching, and AMF may indicate that the network supports non-3GPP access path switching. In this case, if the PLMN of the selected new non-3GPP access is the same as that of the old non-3GPP access (e.g., TNGF or N3IWF), the UE may trigger a mobility registration update via the new non-3GPP access to transfer traffic from the PLMN of the old non-3GPP access to the new non-3GPP access.

If the AMF indicates support for non-3GPP access path switching during the registration procedure, the UE may trigger non-3GPP path switching even if the SMF does not indicate support for non-3GPP access path switching to the UE during the MA PDU session establishment.

In this case, for the registration procedure described in TS 23.501 V18.0.0, section 4.22.9.1, the following differences may apply:
FIG. 11a and FIG. 11b illustrate specific examples of the procedure.

Step 1. The UE may transmit a registration request message to a new non-3GPP AN. The following may additionally apply:
- The UE may want to switch the user plane from the old non-3GPP access to the new non-3GPP access to which the mobility registration update was transmitted. In this case, the UE may indicate the PDU session ID of the PDU session in the list of PDU sessions to be activated (e.g., List Of PDU Sessions To Be Activated). This may include both the PDU session ID corresponding to the MA PDU session and the PDU session ID corresponding to the single access PDU session.

In addition, the UE may provide an indication (e.g., "Non-3GPP access path switching while using old AN resources") in the registration request to indicate that the UP connection via old non-3GPP access may continue to be used for MA PDU sessions during the registration procedure. If the UE cannot use the UP connection via the old non-3GPP access during the registration procedure, the UE does not provide the "Non-3GPP access path switching while using old AN resources" indication.

If the PLMN of the selected new non-3GPP access is different from the PLMN of the old non-3GPP access, the UE does not perform non-3GPP access path switching.

2. The same as step 2 in FIG. 5 and FIG. 6 may be performed.

3. The same as step 3 in FIG. 5 and FIG. 6 may be performed. The new non-3GPP AN may send a registration request message to the AMF. The following may be additionally applied:
- In step 1, the UE may have transmitted the indication "Non-3GPP access path switching while using old AN resources". Also, the AMF can support maintaining two N2 connections for non-3GPP access during the registration procedure. In this case, the AMF may delay the release of the existing N2 connection until the UP connection via the new non-3GPP access is established. Otherwise, the AMF may trigger the release of the old non-3GPP access before proceeding with the registration procedure for the new non-3GPP access, and the following description may apply in addition:
   - During the AN release procedure, the AMF may inform the SMF to release the UP resources for the active PDU sessions before sending the N2 UE context release command to the old non-3GPP access.

According to various examples in the present disclosure, steps 1 to 3b may be performed as shown in the drawings. Steps 3c and 3d are described in detail below.

Step 3c. The UPF may notify the SMF that downlink data is available. The SMF may transmit a message to the AMF via Namf_Communication_N1N2MessageTransfer to transmit the downlink data.

Step 3d. The AMF may know that non-3GPP path switching is in progress. In this case, the AMF may send a response message to the SMF for Namf_Communication_N1N2MessageTransfer. While sending the response message, the AMF may notify the SMF that the SMF's request has been temporarily rejected. For example, the AMF may send an indication that Namf_Communication_N1N2MessageTransfer has been temporarily rejected to the SMF. Upon receiving such an indication, the SMF may start a guard timer and wait for signaling (e.g., a message) from the AMF.

- Due to pending downlink data in the UPF, the SMF may request to establish user plane resources before non-3GPP path switching is completed. For example, the SMF may request the establishment of user plane resources by transmitting a message based on Namf_Communication_N1N2MessageTransfer to the AMF. In this case, the AMF may reject the request with an indication that the Namf_Communication_N1N2MessageTransfer has been temporarily rejected (e.g., indication that the Namf_Communication_N1N2MessageTransfer has been temporarily rejected). For example, the AMF may transmit an indication (e.g., indication that the Namf_Communication_N1N2MessageTransfer has been temporarily rejected) to the SMF. The SMF may receive a Namf_Communication_N1N2MessageTransfer response (e.g., a response message) including an indication that the request has been temporarily rejected. The SMF may start a locally configured guard timer and wait for any message from the AMF. Upon receiving a message from the AMF, the SMF shall re-invoke the Namf_Communication_N1N2MessageTransfer (including N2 SM information and/or N1 SM information) to the AMF. For example, the SMF may transmit a Namf_Communication_N1N2MessageTransfer-based message (e.g., a message including N2 SM information and/or N1 SM information) to the AMF.

4. This may be performed in the same manner as steps 4 to 16 of FIG. 5 and FIG. 6.

5-11. These steps may be performed in the same manner as step 17 of S4.22.9.1 of TS 23.502 V18.0.0, with the following additions:
- A registration procedure may be triggered to switch traffic from the old non-3GPP access to the new non-3GPP access, and the UE may have provided an indication in step 1 ("Switching non-3GPP access path while using old AN resources"). In this case, if the AMF supports maintaining two N2 connections for non-3GPP access, and the PDU session is an MA PDU session, the AMF may forward the indication to the SMF. Upon receiving the indication, the SMF does not trigger the release of the UP connection for the old non-3GPP access to the old N3IWF or TNGF (if any).
- In steps 7 and 8, CN tunnel information is transmitted from the SMF to the new non-3GPP AN via the AMF. An IPSec child SA between the UE and the new non-3GPP AN may be configured.
- In step 10, the SMF may update the N4 rule by replacing the AN tunnel information of the old non-3GPP AN with the AN tunnel information of the new non-3GPP AN. Accordingly, the SMF instructs the UPF to switch the traffic from the old non-3GPP access path to the new non-3GPP access path.
- Once the UP connection is configured via the new non-3GPP access, the UE and UPF start transmitting traffic via the new non-3GPP access.

12. After the UP connection is established via the new non-3GPP access, the AMF also triggers an AN release for the previous non-3GPP access (e.g., previous N3IWF or TNGF) with the following description, if not already done:
- In Step 1, if a PDU session is not included in the list of PDU sessions to be activated that the UE transmitted, but is marked as a previous non-3GPP access in the "list of PDU session IDs with activated N3 user planes," the AMF requests the SMF to deactivate the PDU session. For other PDU sessions, the AMF does not request deactivation of the PDU session from the SMF.
- When the UE receives a registration acceptance via a new non-3GPP access, the UE considers the registration on the old non-3GPP access to be canceled.

The following drawings are provided to explain specific examples of the present disclosure. The names of specific devices, signals, messages, and fields shown in the drawings are provided as examples, and the technical features of the present disclosure are not limited to the specific names used in the following drawings.

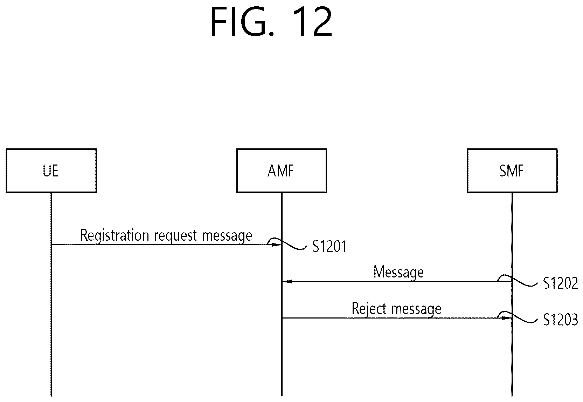

**FIG. 12** **shows an example of a procedure performed according to an embodiment of the present disclosure.**

For reference, the procedure shown in FIG. 12 is merely an example, and the scope of the present disclosure is not limited by the example shown in FIG. 12.

For example, with regard to the example shown in FIG. 12, the operations described in the examples shown in FIG. 1 to FIG. 11a and FIG. 11b may also be applied. For example, even if an operation or content is not directly described in the example of FIG. 12, the operation or content described in various examples of the present disclosure may be applied.

In step S 1201, the UE may transmit a registration request message to the AMF. For example, the UE may transmit a registration request message to the AMF via a new non-3GPP AN.

For example, the UE may want to switch traffic from an old non-3GPP access to a new non-3GPP access. In such a case, the UE may trigger a mobility registration update via the new non-3GPP access.

Based on the trigger, the UE may send a registration request message. For example, the UE may transmit a registration request message to the AMF via the new non-3GPP AN. The registration request message transmitted via the new non-3GPP AN may be a registration request message related to non-3GPP path switching. The registration request message may not include a "Non-3GPP path switching while using old AN resource" indication. For example, the "Non-3GPP path switching while using old AN resource" indication may indicate that a User Plane (UP) connection via the old non-3GPP access is still available during the registration procedure.

The registration request message may include a list of PDU sessions to be activated. The list of PDU sessions to be activated may include PDU session IDs related to the non-3GPP access path switching.

For example, by transmitting the registration request message, the UE may trigger the operation of the AMF related to non-3GPP path switching.

The AMF may trigger a procedure to release AN resources for the old non-3GPP access based on the fact that the registration request message was received via a new non-3GPP AN. For example, based on the fact that the registration request message does not include an indication such as "Non-3GPP path switching while using old AN resource," or even if the registration request message includes such an indication, the AMF may trigger a procedure to release AN resources for the old non-3GPP access during the registration procedure. or, even if the registration request message includes the indication, based on the fact that the AMF does not support two N2 connections from non-3GPP access during the registration procedure, a procedure for releasing AN resources for the old non-3GPP access may be triggered.

In step S1202, the SMF may transmit a message to the AMF. For example, the message may be a request message based on Namf_Communication_N1N2MessageTransfer. The SMF may transmit a request message to the AMF to request the esstablishment of user plane resources. The request message may have been sent by the SMF due to pending downlink data in the User Plane Function (UPF).

In step S1203, the AMF may transmit a rejection message to the SMF. Based on that the request message was received before the non-3GPP path switching is completed, the AMF may reject the request message. For example, the rejection message may include an indication that the Namf_Communication_N1N2MessageTransfer has been temporarily rejected (e.g., indication that the Namf_Communication_N1N2MessageTransfer has been temporarily rejected).

Upon receiving the indication that it has been temporarily rejected, the SMF may start a locally configured guard timer. The SMF may wait for a message from the AMF. After the guard timer has started, if a message is received from the AMF, the SMF may send a message based on Namf_Communication_N1N2MessageTransfer to the AMF.

According to various embodiments of the present disclosure, the UE may transmit a registration request that does not include indication ("Non-3GPP path switching while using old AN resources") to the AMF. The AMF may trigger an AN release to the old non-3GPP access. Before non-3GPP path switching is completed, SMF may request AMF to establish user plane resources. In this case, AMF may transmit a temporarily rejected indication together with a reject message to SMF. SMF may activate a guard timer and receive a message from AMF. If AMF transmits a message to SMF, SMF may request again to establish user plane resources.

For example, according to various embodiments of the present disclosure, the AMF may perform an AN release for the old non-3GPP path while non-3GPP path switching is in progress. During the AN release, the AMF may request PDU session deactivation to the SMFs managing the PDU sessions activated to the old non-3GPP path. While requesting PDU session deactivation, the AMF may inform the SMF that the terminal is performing non-3GPP path switching or that user plane resource setup cannot be performed. Accordingly, the SMF may not request PDU session activation while non-3GPP path switching is being performed.

For example, while non-3GPP path switching is being performed, SMF may request N2 information transmission to AMF for PDU session activation. In this case, AMF may reject SMF's request and prevent SMF from requesting additional PDU session activation while non-3GPP path switching is being performed.

The present disclosure may have various effects.

For example, unnecessary resources from being allocated to old non-3GPP access during non-3GPP path switching may be prevented. For example, while a terminal is performing non-3GPP path switching, the problem of user plane resource setup of PDU Session being established again to old non-3GPP access may be prevented.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, AI/ML Application Server (AS), AIML NF, AIML NF/NEF, NEF, UDM, DN, NWDAF, UDR, new NF, etc.) or base station (e.g., NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by an Access and Mobility Management Function (AMF) and comprising:
receiving a registration request message via a new non-3GPP Access Network (AN) from a User Equipment (UE);
triggering a procedure to release AN resource for an old non-3GPP access;
receiving a request message for requesting the establishment of a user plane resource from a Session Management Function (SMF);
rejecting the request message, based on that the request message is received before the non-3GPP path switching is finished; and
transmitting an indication related to that the request message has been temporarily rejected to the SMF.

2. The method of claim 1,
based on that the registration request message does not include indication "Non-3GPP path switching while using old AN resource", or based on that the AMF does not support two N2 connections from non-3GPP access during the registration procedure and the registration request message includes the indication, wherein the procedure for releasing the AN resource for the old non-3GPP access is triggered.

3. The method of claim 1 or claim 2,
wherein the indication "Non-3GPP path switching while using old AN resource" indicates that User Plane (UP) connections via old non-3GPP access are still available during the registration procedure.

4. The method of any one of claims 1 to 3,
wherein the request message is transmitted by the SMF due to pending downlink data in the User Plane Function (UPF).

5. The method of any one of claims 1 to 4,
wherein the indication related to that the request message has been temporarily rejected is used by the SMF, to start a guard timer configured locally and to wait for a message from the AMF.

6. The method of any one of claims 1 to 5,
wherein the registration request message includes a list of PDU sessions to be activated, and
wherein the list of PDU sessions to be activated includes PDU session ID related to the non-3GPP access path switching.

7. The method of any one of claims 1 to 6,
wherein the registration request message is transmitted by the UE to trigger a mobility registration update via the new non-3GPP access, in order to switch traffic from the old non-3GPP access to the new non-3GPP access.

8. An Access and Mobility Management Function (AMF) for performing communication, the AMF comprising:
at least one transceiver;
at least one processor; and
at least one computer memory operably connectable to the at least one processor and storing instructions that, based on being executed by the at least one processor, perform operations comprising: the method of any one of claims 1 to 7.

9. A method for performing communication, the method performed by a user equipment (UE) and comprising:
triggering a mobility registration update via a new non-3GPP access in order to switch traffic from an old non-3GPP access to a new non-3GPP access; and
based on the triggering, transmitting a registration request message to an Access and Mobility Management Function (AMF) via a new non-3GPP Access Network (AN),
wherein the registration request message does not include a "Non-3GPP path switching while using old AN resource" indication, and
based on that the registration request message does not include the indication, when the AMF receives a request message for requesting an establishment of user plane resources from the Session Management Function (SMF) before the non-3GPP path switching is finished, wherein an indication related to that the request message has been temporarily rejected is transmitted, by the AMF, to the SMF.

10. The method of claim 9,
wherein the registration request message includes a list of PDU sessions to be activated, and
wherein the list of PDU sessions to be activated includes PDU session ID related to the non-3GPP access path switching.

11. A User Equipment (UE) for performing communication, the UE comprising:
at least one transceiver;
at least one processor; and
at least one computer memory operably connectable to the at least one processor and storing instructions that, based on being executed by the at least one processor, perform operations comprising: the method of any one of claims 9 to 10.

12. An apparatus in mobile communication, the apparatus comprising:
at least one processor; and
at least one computer memory operably connectable to the at least one processor and storing instructions that, based on being executed by the at least one processor, perform operations comprising: the method of any one of claims 9 to 10.

13. A non-transitory Computer Readable Medium (CRM) storing instructions that, based on being executed by at least one processor, perform the method of any claims 9 to 10.
